# FASCICULE DE BREVET EUROPEEN

(11) **EP 4 282 260 B1**
(45) Date de publication et mention de la délivrance du brevet: **07.05.2025**
(21) Numéro de dépôt: 23175145.4
(22) Date de dépôt: 24.05.2023
(51) Int. Cl.: A01K 5/02, A01F 25/20, G05D 1/00

(54) **PROCEDE DE CONTROLE DE L'ENVIRONNEMENT D'UNE MACHINE AGRICOLE AUTONOME D'ALIMENTATION ANIMALE ET SYSTEME DE CONTROLE DE L'ENVIRONNEMENT D'UNE TELLE MACHINE**
VERFAHREN ZUR KONTROLLE DER UMGEBUNG EINER AUTONOMEN LANDWIRTSCHAFTLICHEN TIERFUTTERMASCHINE UND SYSTEM ZUR KONTROLLE DER UMGEBUNG EINER SOLCHEN MASCHINE
METHOD FOR CONTROLLING THE ENVIRONMENT OF AN AUTONOMOUS AGRICULTURAL FEEDING MACHINE AND SYSTEM FOR CONTROLLING THE ENVIRONMENT OF SUCH A MACHINE

(30) Priorité: 25.05.2022 FR 2205045
(43) Date de publication de la demande: 29.11.2023
(73) Titulaire: Kuhn-Audureau SAS, 85260 La Copechagnière (FR)
(72) Inventeur: GUIDAULT, Léandre, 85000 LA ROCHE SUR YON (FR); LEGRAND, Adrien, 85000 LA ROCHE-SUR-YON (FR)
(74) Mandataire: Hager, Esther Evelyne

(56) Documents cités:
- EP-A1- 0 721 732
- EP-A1- 2 232 982
- WO-A1-2016/078757
- DE-A1- 102016 224 294
- FR-A1- 3 113 998

## Description

La présente invention concerne le domaine du machinisme agricole et de l'alimentation animale. Elle a pour objet un procédé de contrôle de l'environnement d'une machine agricole autonome d'alimentation animale. Elle a également pour objet un système de contrôle de l'environnement d'une telle machine agricole autonome d'alimentation animale. Le système de contrôle convient à la mise en œuvre du procédé de contrôle.

Dans une installation d'alimentation pour les animaux, le produit d'alimentation animale est généralement entreposé dans un silo, également appelé silo couloir. Le produit d'alimentation qui sert à l'alimentation des animaux, tel que du fourrage, est stocké sous la forme d'un tas de produit. La face frontale et verticale du tas de produit dans laquelle est effectuée le prélèvement est généralement appelée front de prélèvement ou d'attaque. Le chargement du produit est effectué au moyen d'une machine agricole d'alimentation animale munie d'un outil de prélèvement tel qu'une fraise rotative.

On assiste actuellement à une automatisation des opérations d'alimentation pour optimiser le temps de travail des utilisateurs et réduire les contraintes liées à certaines tâches. C'est ainsi que le prélèvement sur le front de prélèvement d'un tas de produit est de plus en plus réalisé au moyen d'une machine agricole autonome conçue pour pouvoir se déplacer et venir se positionner de manière autonome, lors d'un passage de prélèvement, devant le front de prélèvement dans une position de prélèvement. Une telle machine agricole autonome est aussi appelée, par exemple, robot d'alimentation ou mélangeuse automotrice autonome.

Au cours du fonctionnement automatique de l'installation d'alimentation concernée et notamment pour composer les différentes rations de mélange de produits, la machine agricole autonome prélève successivement les différentes quantités requises de produits correspondant à la ration à préparer. Les différents produits sont mélangés puis distribués aux animaux. Le prélèvement de produit, par exemple l'ensilage de maïs ou d'herbe, est réalisé par la machine agricole autonome directement dans le silo où le produit est stocké. Dans ce cas, l'installation d'alimentation ne dispose pas d'une cuisine dans laquelle les différents produits sont mis à disposition. Le prélèvement est réalisé directement dans le silo, sans avoir à manipuler le produit préalablement. Plusieurs passages de prélèvement, formant respectivement une succession de positions de prélèvement les unes à côtés des autres le long du front de prélèvement sont nécessaires à la machine agricole autonome pour réaliser le prélèvement de produit. La succession de positions de prélèvement peuvent correspondre à toute ou quasiment toute la largeur du tas de produit.

Ces machines agricoles autonomes sont en outre généralement équipées d'un dispositif de sécurité permettant de détecter des obstacles (pouvant être un objet, une personne ou un animal par exemple) dans leur environnement proche, généralement dans la direction de déplacement de la machine agricole autonome ou dans la zone de l'outil de prélèvement, nécessitant un arrêt d'urgence de la machine agricole autonome par sécurité. Cet arrêt d'urgence est commandé par le dispositif de sécurité qui génère, lorsqu'il détecte l'obstacle, un signal d'arrêt entraînant instantanément l'arrêt de la machine agricole autonome en la bloquant devant le front de prélèvement. Un tel arrêt nécessite alors une intervention de l'utilisateur sur le site de prélèvement pour redémarrer manuellement la machine agricole autonome.

Toutefois, l'éboulement d'une partie du tas de produit et/ou l'accumulation au sol de produit lors du prélèvement, qui sont plus ou moins importants selon le type de produit stocké, sont également détectés par le dispositif de sécurité et interprétés par ce dernier comme des obstacles nécessitant l'arrêt d'urgence de la machine agricole autonome. Ces arrêts non nécessaires obligent alors l'intervention sur place d'un utilisateur pour redémarrer la machine agricole autonome bloquée devant le front de prélèvement dans le silo.

Une partie de ces arrêts sont évités par les interventions manuelles des utilisateurs sur le site de prélèvement, généralement le matin, avant les opérations de prélèvement de la machine agricole autonome, pour enlever le produit accumulé devant le ou au niveau du front de prélèvement. Cependant, ces interventions, et du fait que ces éboulements ou accumulations de produit ne sont pas prévisibles, n'empêchent pas par la suite de nouveaux éboulements et/ou de nouvelles accumulations de produit susceptibles d'entraîner la génération de signaux d'arrêt par le dispositif de sécurité lors d'un prochain passage de la machine agricole autonome. Ces signaux d'arrêt non nécessaires obligent alors l'utilisateur à intervenir sur le site pour redémarrer la machine agricole autonome et éventuellement effectuer une intervention pour enlever le produit accumulé au pied du silo. En outre, pour ne pas pénaliser la productivité de l'installation d'alimentation automatisée, ces interventions doivent être effectuées rapidement ce qui est une contrainte supplémentaire pour l'utilisateur. Par le document WO 2016078757, on connait un véhicule capable de générer une trajectoire alternative pour éviter tout obstacle sur sa route.

La présente invention a pour but de pallier ces inconvénients en proposant un procédé de contrôle de l'environnement d'une machine agricole autonome d'alimentation animale permettant d'anticiper au moins une partie des signaux d'arrêt liés à la présence éventuelle de produit devant ou au niveau du front de prélèvement et susceptibles d'être interprétés comme des obstacles nécessitant un arrêt d'urgence de la machine agricole autonome. Une telle anticipation permet à l'utilisateur d'intervenir sur le site, notamment en dehors de ses interventions de nettoyage habituelles, pour enlever le produit susceptible d'entraîner un arrêt d'urgence lors d'un prochain passage de prélèvement de la machine agricole autonome.

Conformément à l'invention, le but est atteint par un procédé de contrôle de l'environnement d'une machine agricole autonome d'alimentation animale, selon les caractéristiques de la revendication 1 et par un système de contrôle de l'environnement d'une machine agricole autonome d'alimentation animale selon les caractéristiques de la revendication 8.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue schématique en perspective d'un silo contenant un tas de produit d'alimentation animale, montrant une machine agricole autonome, dans une position de prélèvement, sur laquelle est embarquée au moins une partie du système de contrôle selon la présente invention et une cible critique au pied du front de prélèvement,
[Fig. 2] est une vue en plan de dessus du silo représenté sur la figure 1 montrant la machine agricole autonome de manière schématique, l'environnement de la machine agricole autonome observé depuis cette dernière et la zone de référence critique par rapport à la machine agricole autonome,
[Fig. 3] est une vue en coupe transversale schématique de la machine agricole autonome dans une position de prélèvement devant le front de prélèvement d'un tas de produit d'alimentation animale, montrant l'environnement de la machine agricole autonome observé depuis cette dernière et deux zones de référence respectivement critique et non critique par rapport à la machine agricole autonome, ainsi qu'une cible critique détectée dans l'environnement observé,
[Fig. 4] est la même vue en plan de dessus que celle de la figure 2, mais avec la machine agricole autonome dans la position de prélèvement suivante et montrant deux zones de référence respectivement critique et non critique par rapport à la machine agricole autonome,
[Fig. 5] représente le schéma fonctionnel du système de contrôle de l'environnement selon la présente invention, dans un mode de réalisation préférentiel,
[Fig. 6] est une vue en perspective de la machine agricole autonome représentée sur la figure 1, du côté de sa partie frontale équipée de l'outil de prélèvement et de deux capteurs LiDAR permettant d'observer l'environnement de la machine agricole autonome,
[Fig. 7] est un diagramme d'une séquence de contrôle de l'environnement de la machine agricole autonome dans la configuration de la figure 2 avec une zone de référence critique,
[Fig. 8] est un diagramme d'une séquence de contrôle de l'environnement de la machine agricole autonome dans la configuration de la figure 3 ou 4 avec deux zones de référence respectivement critique et non critique.

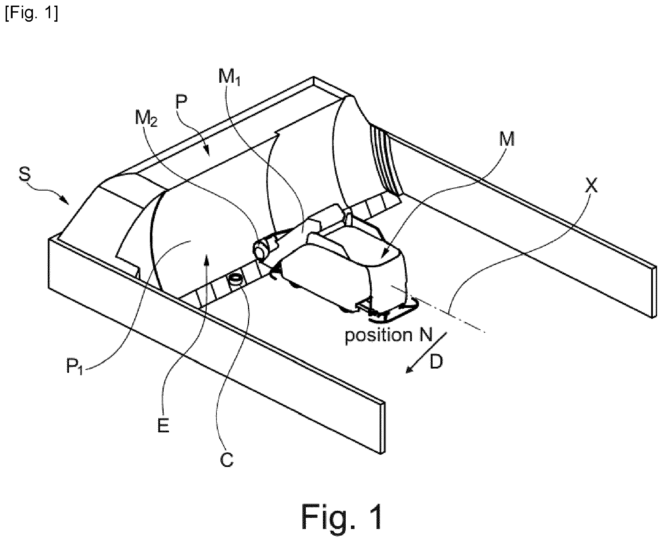

Les figures 1 à 6 montrent un système de contrôle de l'environnement d'une machine agricole autonome M d'alimentation animal. La machine agricole autonome M étant apte et destinée, de manière autonome, lors d'un passage de prélèvement, à venir se positionner devant le front de prélèvement P1 d'un tas de produit P d'alimentation animale dans une position N de prélèvement et à réaliser une opération de prélèvement sur le front de prélèvement P1.

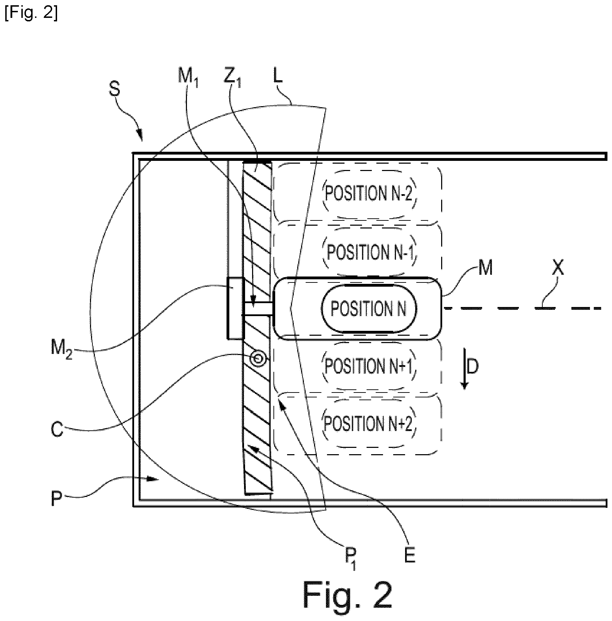

Plusieurs passages de prélèvement forment respectivement une succession de positions N-2, N-1, N, N+1, N+2 de prélèvement les unes à côtés des autres le long du front de prélèvement P1. Le sens de progression D de la machine agricole autonome M le long du front de prélèvement P1, généralement d'un côté du silo S ou du tas de produit à l'autre, fait ainsi passer la machine agricole autonome M d'une position N à une position N+1 lors d'un passage de prélèvement au suivant. La position N est représentée par des traits continus et les autres positions N-2, N-1, N+1, N+2 précédentes et suivantes par rapport à cette position N sont représentées par des traits interrompus. Dans le cas d'utilisation représentée sur la figure 2, le sens de progression D pour le prélèvement est défini pour passer de la position N-2 à la position N+2. La direction d'avance de la machine agricole autonome M est majoritairement selon son axe longitudinal.

Le tas de produit P est, comme c'est généralement le cas, entreposé dans un silo S, plus connu sous le nom de silo S couloir, en vue de son prélèvement et sa distribution aux animaux (figures 1, 2, 4). Un tel silo S dispose d'au moins deux murs entre lesquels le tas de produit P est entreposé. Le prélèvement du produit se fait généralement en partant d'un des murs en direction de l'autre mur, selon le sens de progression D. D'ordinaire le prélèvement se fait depuis le haut du tas vers le bas, par tranche d'une certaine épaisseur. La largeur de prélèvement correspond à la largeur de l'outil de prélèvement M2 de la machine agricole autonome M. Selon une alternative non représentée, le tas de produit P peut aussi être situé dans un silo S sans murs, ou parois latérales délimitant la largeur du silo S et contenant ou renfermant le tas de produit. Le prélèvement de produit se fait de la même manière d'un côté à l'autre dans le sens de progression D.

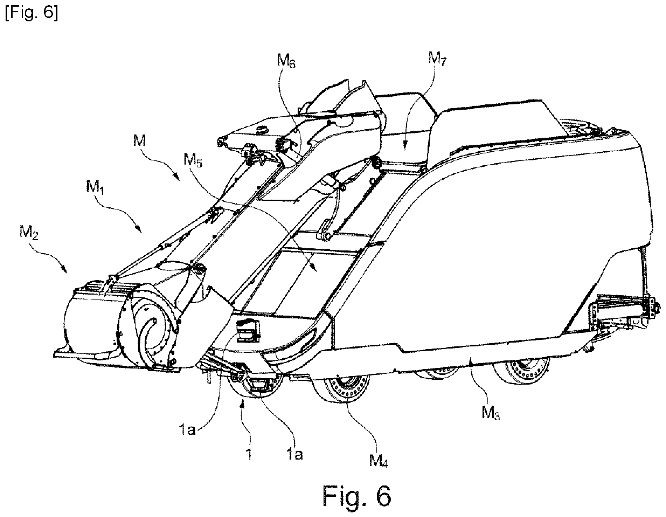

Une telle machine agricole autonome M, comprend, comme on peut le voir plus particulièrement sur les figures 1 et 6, un châssis M3 monté sur des roues M4, de préférence quatre roues M4, et un outil de prélèvement M2, tel qu'une fraise rotative, monté à l'extrémité d'un bras M1. Le bras M1 est monté à l'avant de la machine agricole autonome M (en considérant le sens d'avancement de cette dernière). Le bras M1 peut être monté de sorte à pouvoir être déplacé, sous l'effet d'un ou plusieurs actionneur(s) M6, dans un plan vertical et/ou, pour permettre un prélèvement sur toute la largeur de la machine sans nécessité son déplacement, en translation dans une direction latérale perpendiculaire à l'axe X de la machine agricole autonome M. Elle comprend également (non visibles sur les figures annexées) un moteur dont la puissance est transmise aux différents organes de la machine et/ou une source d'énergie autonome telle que, par exemple, une ou plusieurs batterie(s) rechargeable(s). D'autre part, pour permettre la commande et le contrôle/guidage de son déplacement et des opérations de prélèvement, selon la mission de prélèvement et/ou de distribution prédéterminée sélectionnée, la machine agricole autonome M comprend en outre un système de guidage et une unité de commande électronique.

La machine agricole autonome M est en outre équipée d'un dispositif de sécurité. Un tel dispositif de sécurité est connu sur ce type de machine agricole autonome. Plus particulièrement, un tel dispositif de sécurité permet de détecter des obstacles (pouvant être un objet, une personne ou un animal par exemple) dans l'environnement proche, dans la direction de déplacement de la machine agricole autonome M ou dans la zone de l'outil de prélèvement M2 comme c'est le cas généralement, nécessitant un arrêt d'urgence de la machine agricole autonome M par sécurité. Cet arrêt d'urgence est commandé par le dispositif de sécurité qui génère, lorsqu'il détecte l'obstacle, un signal d'arrêt entraînant instantanément l'arrêt de la machine agricole autonome M en la bloquant devant le front de prélèvement P1 jusqu'à son redémarrage par l'utilisateur.

La machine agricole autonome M comprend également au moins une cuve M7 pour recevoir le produit prélevé, au moins un convoyeur (non visible sur les figures annexées), par exemple monté dans le bras M1 portant l'outil de prélèvement M2, permettant d'acheminer le produit dans la cuve M7. Elle comprend éventuellement un dispositif mélangeur tel qu'au moins une vis mélangeuse par exemple (non visible sur les figures annexées), monté dans la cuve M7. Elle peut encore comprendre un dispositif de distribution du produit tel qu'un tapis transversal permettant de distribuer le produit prélevé et/ou mélangé aux animaux.

Pour permettre à l'utilisateur de contrôler le fonctionnement ou l'activité de la machine agricole autonome M, celui-ci peut utiliser, de manière connue, une interface du type PC, tablette ou smartphone.

Conformément à la présente invention, le système de contrôle comprend :
- des moyens d'observation 1 embarqués sur la machine agricole autonome M et configurés de sorte à pouvoir, dans une position de la machine agricole autonome M devant le front de prélèvement P1, de préférence dans l'une des positions de prélèvement N, observer l'environnement E de la machine agricole autonome M devant ou au niveau du front de prélèvement P1,
- des moyens de traitement 2 embarqués sur la machine agricole autonome M et étant reliés aux moyens d'observation 1 et configurés pour traiter les données de l'observation obtenues par les moyens d'observation 1 de sorte à pouvoir détecter la présence ou l'absence de cible(s) C et à en déduire :
   . un résultat de détection critique positif indiquant la présence d'au moins une cible, dite cible C critique, susceptible de générer un incident, par exemple un arrêt de la machine agricole autonome M, au niveau et/ou devant le front de prélèvement P1 lors d'un prochain passage de prélèvement ou un résultat de détection critique négatif indiquant l'absence de cible(s) C critique(s),
   . éventuellement, un résultat de détection non critique positif indiquant la présence d'au moins une cible C non critique ou un résultat de détection non critique négatif indiquant l'absence de cible(s) C non critique(s),
- des moyens d'information 3 reliés aux moyens de traitement 2 et configurés pour mettre à disposition de l'utilisateur au moins une information sur les résultats, c'est-à-dire le ou les résultats dudit traitement.

On comprend qu'un tel système de contrôle est distinct du dispositif de sécurité décrit plus haut.

Dans le cas d'un résultat de détection critique positif indiquant la présence d'au moins une cible C critique ou non critique, la présente invention peut prévoir que les moyens d'observation 1 et les moyens de traitement 2 soient configurés pour pouvoir identifier en outre la forme de la cible C critique ou non critique. Grâce à l'identification de la forme de la cible C, l'utilisateur pourra obtenir et tenir compte de cette information. Cette information permettra notamment à l'utilisateur d'anticiper son intervention sur le site.

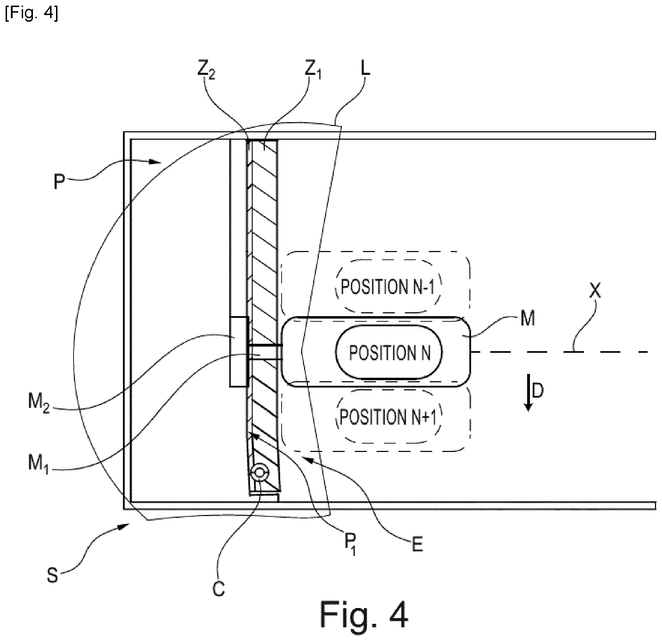

La figure 1 illustre la machine agricole autonome M dans une position N permettant la réalisation du prélèvement du front de prélèvement P1. Elle est située devant le tas de produit P présent dans le silo S au niveau du front de prélèvement P1. Le tas de produit P à prélever s'étend au fond du silo S, ici il reste environ un tiers de produit à prélever. La machine agricole autonome M est représentée en position N, entre les murs du silo S et approximativement au centre du tas de produit P. La machine agricole autonome M s'étend devant le front de prélèvement P1 avec le bras M1 dans sa position basse utilisée pour les déplacements. Pour prélever du produit, le bras M1 sera déplacé pour que l'outil de prélèvement M2 puisse atteindre le haut du tas de produit P. Cette opération se déroulera effectivement si le dispositif de sécurité ne détecte pas d'obstacle directement à l'avant de (ou devant la) la machine agricole autonome M, particulièrement au niveau de l'outil de prélèvement M2. On remarque le décrochement au niveau du front de prélèvement P1 qui conditionne le positionnement de la machine agricole autonome M dans la position N (voir également les figures 2 et 4). Sur la figure 1, on remarque la présence d'un obstacle à gauche de la machine agricole autonome M qui va empêcher le prélèvement de produit suivant en positon N+1. Cet obstacle est, par exemple, un pneu ou bandage pneumatique. D'autres obstacles, pouvant se trouver au niveau du front de prélèvement P1, sont par exemple un éboulement de produit ou un outil tel qu'une pelle ou une fourche ou même un ballon.

Selon l'invention, la machine agricole autonome M, grâce à ses moyens d'observation 1 va observer l'environnement E proche du front de prélèvement P1, plus particulièrement à l'avant de l'outil de prélèvement M2 et sur les côtés. Dans le cas représenté sur les figures 1 et 2, les moyens d'observation 1 vont observer l'obstacle et envoyer ce résultat d'observation aux moyens de traitement 2. Ces moyens de traitement 2 vont déduire que l'obstacle est une cible C à détecter puisqu'elle est susceptible de générer un incident lors du prochain passage de la machine agricole autonome M, notamment dans la position N+1. Les moyens de traitement 2 concluront donc à un résultat de détection critique positif et cette information sera mise à disposition de l'utilisateur via les moyens d'information 3. L'information du résultat du traitement, à la suite de l'observation de l'environnement E, est envoyée ou mise à disposition de l'utilisateur directement/rapidement, il pourra alors dès que possible venir sur le site et retirer l'obstacle, par exemple un pneu ou un bandage pneumatique, pour éviter que la machine agricole autonome M déclenche un arrêt d'urgence à cause de cet obstacle dans la position N+1 de prélèvement. L'objectif de l'invention est de libérer l'accès à la position N+1 pour la machine agricole autonome M pour le prochain prélèvement au niveau du front d'attaque. Il ne s'agit pas d'éviter l'obstacle et de prélever à la position N+2 en corrigeant la trajectoire. Il s'agit de transmettre une information d'alerte dans le but de retirer l'obstacle détecté au niveau du front d'attaque.

D'une manière avantageuse, les moyens d'observation 1 pourront observer l'environnement E durant le trajet d'arrivée de la machine agricole autonome M vers le front de prélèvement P1, durant le trajet de sortie du silo S ou même pendant l'opération de prélèvement. Avantageusement, l'observation de l'environnement E est effectuée une fois la machine agricole autonome M dans sa position de prélèvement N, avant ou pendant le pivotement vers le haut du bras M1. On remarque encore une zone de référence Z1 critique schématisée par des hachures au pied du front de prélèvement P1. L'obstacle est situé dans cette zone de référence Z1 et est détecté en tant que cible C critique par le système de contrôle de l'environnement de la machine agricole autonome M. L'utilisation d'une ou plusieurs zones de référence Z1, Z2 pour les moyens de traitement 2 permet de définir les zones d'observation à traiter et notamment de réduire les temps de calcul. Pour simplifier la définition de ces zones de référence, le système de contrôle et notamment les moyens d'observation 1 et de traitement 2 vont examiner une surface ou un volume devant le front de prélèvement P1 et sur toute la largeur du silo S délimitée par les murs. D'une manière préférentielle, on pourrait en plus avec la définition du sens de progression D, ne pas s'attacher à vérifier le pied du tas de produit des positions de prélèvement qui ont été faites précédemment. Dans le cas de la figure 2, il s'agirait des positions N-1 et N-2 de prélèvement. Le volume ou la largeur de la zone de référence Z1, lorsqu'il n'y a qu'une seule zone, correspondant par exemple à une ou deux fois le diamètre de l'outil de prélèvement M2. Bien entendu, le système de contrôle de l'environnement selon l'invention ne donnera pas de résultat de détection critique ou non critique à l'utilisateur si un obstacle est en dehors de la zone de référence traitée par les moyens de traitement 2, même si observé par les moyens de détection 1.

Dans une forme de réalisation préférentielle des moyens d'information 3, ceux-ci peuvent consister en au moins un appareil fixe ou portable, tel que par exemple un smartphone, une tablette ou un ordinateur personnel relié aux moyens de traitement 2. Le ou chaque appareil fixe ou portable est muni de moyens de restitution 3a visuelle et/ou sonore configurés pour pouvoir (ou permettant de) restituer l'information sous une forme visuelle et/ou sonore. Par exemple, une restitution de l'information sous forme visuelle se fait via un écran d'affichage. Une restitution sonore est réalisée par exemple par un haut-parleur. Les moyens de traitement 2 sont configurés pour pouvoir transmettre l'information, de préférence à distance, par exemple par radio fréquence, aux moyens d'information 3, par exemple à l'appareil fixe ou portable. En outre, l'information peut consister de préférence en une information d'alerte se présentant sous la forme d'un message textuel et/ou visuel, de préférence du type SMS.

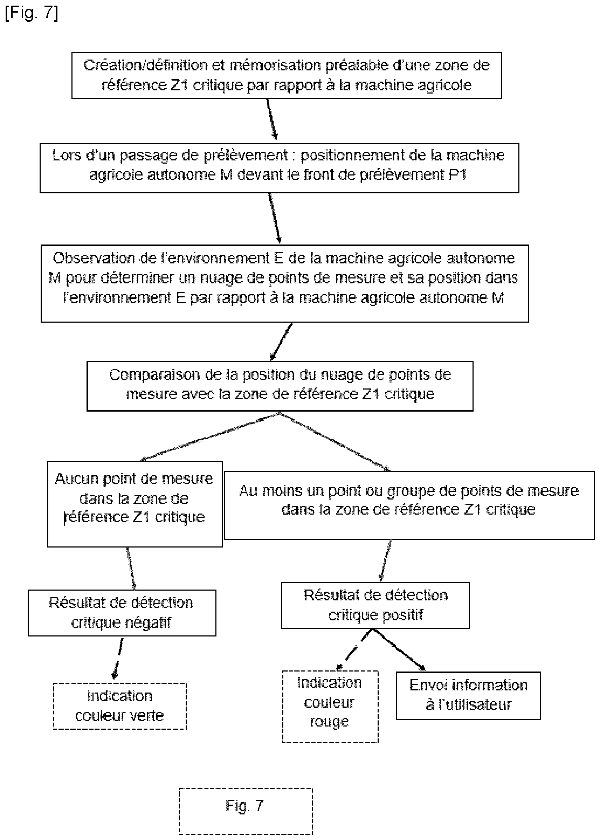

Un message d'alerte visuel transmis à l'utilisateur peut être par exemple une indication de couleur rouge dans le cas d'un résultat de détection critique positif, une indication de couleur verte dans le cas d'un résultat de détection critique ou non critique négatif et une indication de couleur orange dans le cas d'un résultat de détection non critique positif (figures 6 et 7). De préférence, le message d'alerte visuel est transmis au moyen d'un schéma visuel de l'installation d'alimentation. Ce schéma visuel est par exemple une carte sur laquelle sont représentés les différents silos S, les bâtiments dans lesquels la machine agricole autonome M est amenée à se déplacer et à distribuer l'alimentation aux animaux. Sur cette carte pourront être par exemple affichées des balises matérialisant les indications de couleur (rouge, orange et vert) en fonction de l'information à transmettre à l'utilisateur. L'indication visuelle, par exemple de couleur comme vu précédemment, peut être accompagnée d'une information sous forme de texte.

Dans un mode de réalisation préférentiel, les moyens de traitement 2 sont aptes :
- à définir et mémoriser au moins une zone de référence Z1 critique par rapport à la machine agricole autonome M et, éventuellement, au moins une zone de référence Z2 non critique par rapport à la machine agricole autonome M,
- à traiter les données de l'observation de sorte à pouvoir déterminer, par rapport à la machine agricole autonome M, la position de la ou chaque cible C dans l'environnement E observé et à pouvoir comparer la position avec la ou chaque zone de référence Z1, Z2 pour en déduire :
   . le résultat de détection critique positif si la ou moins l'une des cible(s) C se trouve dans la ou au moins l'une des zone(s) de référence Z1 critique(s) ou le résultat de détection critique négatif si aucune cible C ne se trouve dans la ou aucune zone de référence Z1 critique,
   . le cas échéant, le résultat de détection non critique positif si la ou moins l'une des cible(s) C se trouve dans la ou au moins l'une des zone(s) de référence Z2 non critique(s) ou le résultat de détection non critique négatif si aucune cible C ne se trouve dans la ou aucune zone de référence Z2 non critique.

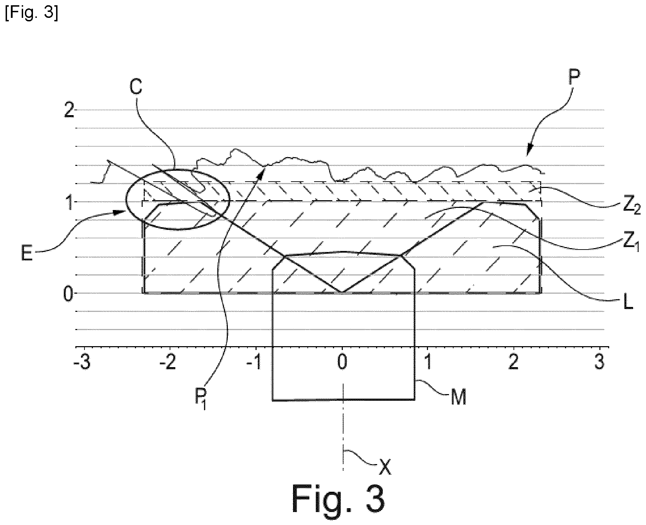

Les figures 3 et 4 montrent, selon une vue de dessus, un front de prélèvement P1 avec une représentation de deux zones de référence, plus particulièrement une zone de référence Z1 critique et une zone de référence Z2 non critique. On remarque que la zone de référence Z2 non critique s'étend entre le front de prélèvement P1 et la zone de référence Z1 critique. La zone de référence Z2 non critique est préférentiellement moins large que la zone de référence Z1 critique. La zone de référence Z2 non critique est représentative d'une zone qui est directement en contact avec le front de prélèvement P1 et qui permettra d'exclure certains incidents par exemple les petits éboulements au niveau du pied du tas de produit P qui ne sont pas des obstacles nécessitant l'arrêt d'urgence de la machine agricole autonome M. Grâce à l'exclusion de cette zone de référence Z2 non critique où il y a de fréquents éboulements, le nombre de signaux d'arrêts interprétés comme des obstacles nécessitant un arrêt d'urgence est réduit. D'une manière avantageuse, l'obstacle disposé en partie sur la zone de référence Z1 critique et sur la zone de référence Z2 non critique, sera observé, d'une part, lors de la position N de prélèvement et, d'autre part, lors de la position N+1 de prélèvement, si l'utilisateur ne l'a pas retiré avant. Les moyens de traitement 2 vont traiter l'information reçue et mettre à disposition de l'utilisateur un résultat de détection critique positif avec une indication de couleur orange dans un premier temps puisque cette cible C critique ne sera que susceptible d'entrainer un arrêt d'urgence de la machine agricole autonome M dans la position N+2 de prélèvement (non représentée sur la figure 4). Le système de contrôle de l'environnement pourra informer l'utilisateur, via une indication de couleur rouge, lorsque la machine agricole autonome M quitte sa position N+1 de prélèvement (représentée sur la figure 4).

De préférence, les moyens d'observation 1 sont configurés pour pouvoir observer l'environnement E par télédétection. Ils comprennent au moins un capteur 1a apte à émettre dans l'environnement E des ondes radio ou acoustiques ou de lumière, de préférence de la lumière laser, et/ou à réceptionner les ondes ou la lumière réfléchie(s) ou diffusée(s) par la ou les cible(s) C et portant les données de l'observation.

De préférence, comme représenté sur les figures annexées, les moyens d'observation 1 par télédétection utilisent la lumière issue d'un laser. De tels moyens d'observation 1 peuvent ainsi comprendre au moins un capteur 1a, par exemple un capteur LiDAR (acronyme de l'expression en langue anglaise « *light detection and ranging* » ou « *laser imaging detection and ranging* » en langue français « détection et estimation de la distance par la lumière » ou « par laser »). Dans la réalisation représentée à la figure 6, les moyens d'observation 1 comprennent deux capteurs 1a, chacun est fixé de manière centrée sur le châssis M3 de la machine agricole autonome M. Une position centrée permet une observation à droite et à gauche de la même façon. Une autre position, par exemple décentrée, est envisageable.

Les moyens d'observation 1 par télédétection peuvent comprendre, de préférence, un capteur 1a qui peut être rendu fonctionnel, notamment du fait de son fonctionnement propre, de son orientation et de sa localisation sur la machine agricole autonome M, pour pouvoir observer l'environnement de la machine agricole autonome M, c'est-à-dire l'environnement dans lequel se trouvera la machine agricole autonome M, en tenant compte de son sens de progression D le long du front de prélèvement P1, dans une ou plusieurs autre(s) position(s) de prélèvement N+1, N+2 (figures 2, 3, 4) ou une ou plusieurs autre(s) position(s) de prélèvement devant le front de prélèvement P1 (la position de prélèvement n'est pas atteinte) en vue de réaliser le prélèvement. Un tel capteur 1a peut être ainsi prévu pour réaliser l'observation dans un sens de progression D ou dans le sens inverse.

La présente invention peut prévoir l'utilisation d'au moins un capteur 1a de technologie LiDAR 2D et/ou LiDAR 3D. La technologie 2D ou 3D pour ce type de capteurs est bien connu et n'est pas détaillée davantage dans la présente demande. Il est toutefois rappelé qu'un capteur LiDAR 2D est conçu pour émettre un seul faisceau de lumière en direction de l'objet cible sur un plan horizontal afin de collecter des données sur les axes X et Y. Un tel capteur LiDAR 2D peut être prévu et monté sur son support pour tourner de sorte à pouvoir collecter suffisamment d'informations sur les coordonnées x et y. Contrairement à un capteur LiDAR 2D, un capteur LiDAR 3D utilise des types particuliers de capteurs qui tournent à trois cent soixante degrés en émettant plusieurs faisceaux lumineux vers le plan vertical d'une cible/objet afin de recueillir les coordonnées x, y et z de la cible.

De préférence, dans le cas du choix de l'utilisation de la technologie LiDAR 2D pour un tel capteur 1a, la présente invention, comme on peut le voir sur la figure 6, peut prévoir deux capteurs 1a de technologie LiDAR 2D, à savoir un premier capteur 1a, préférentiellement disposé sur la partie basse de la face avant de la machine agricole autonome M et un deuxième capteur 1a préférentiellement disposé plus haut sur la face avant de la machine agricole autonome M. Le premier capteur 1a est prévu pour émettre un faisceau de lumière sur un plan horizontal, de préférence sur un angle d'ouverture de l'ordre de 190°, tandis que le deuxième capteur 1a est prévu pour émettre un faisceau de lumière sur un plan vertical afin de détecter les cibles/objets dans la troisième dimension et donc de mieux identifier les cibles/objets détectés par les capteurs 1a.

Dans le cas où la présente invention prévoit l'utilisation de la technologie LiDAR 3D, un seul capteur 1a, par exemple également disposé sur la face avant de la machine agricole autonome M, peut alors permettre de détecter à lui seul les cibles/objets dans la troisième dimension. Lorsque les moyens d'observation 1 comprennent un seul capteur 1a, celui-ci est disposé préférentiellement dans le plan vertical médian (sur l'axe X) de la machine agricole autonome M. Le capteur 1a est alors de préférence fixé au châssis M3 ou sur le bras M1 de la machine agricole autonome M.

Le choix entre la technologie 2D ou 3D pour ce type de capteurs par télédétection par laser peut être dépendante des avantages ou des inconvénients procurés par ces dernières tels que, par exemple, la taille, le coût, leur implantation sur la machine agricole autonome M ou l'intérêt de pouvoir modifier facilement et aisément leur emplacement sur cette dernière. Un capteur LiDAR 2D présente des dimensions réduites par rapport à un capteur LiDAR 3D plus encombrant, ce qui facilite ou peut faciliter sa portabilité, son implantation sur la machine agricole autonome M et/ou la modification de son emplacement sur cette dernière contrairement à un capteur LiDAR 3D. En outre, un capteur LiDAR 2D est moins cher qu'un capteur LiDAR 3D.

Dans le cas où le système prévoit la possibilité de pouvoir identifier en outre la forme de la cible C critique ou non critique, l'utilisation d'un capteur LiDAR 3D, grâce aux données qu'il peut capturer dans les trois dimensions d'un objet, avec un traitement également adapté par les moyens de traitement 2, peut être particulièrement adapté pour identifier la forme. Une telle identification de forme peut également être réalisée selon l'invention à l'aide des deux capteurs LiDAR 2D dans la forme de réalisation décrite précédemment.

La présente invention peut prévoir dans les technologies 2D ou 3D d'autres types ou technologies de capteurs.

Dans une autre forme de réalisation, ces moyens d'observation 1 par télédétection peuvent comprendre au moins un capteur 1a formé, par exemple, par une caméra.

Toujours dans le mode de réalisation préférentiel, les moyens d'observation 1 sont configurés pour déterminer, lors de la télédétection, un nuage de points de mesure retournés par la ou les cible(s) C. En outre, les moyens de traitement 2 sont configurés pour pouvoir traiter les données de l'observation relative au nuage de points de mesure de sorte à pouvoir déterminer, par rapport à la machine agricole autonome M, la position du nuage de points de mesure dans l'environnement E observé et à pouvoir comparer la position avec la ou chaque zone de référence Z1 critique pour en déduire :
- le résultat de détection critique positif si au moins un point de mesure ou groupe de points de mesure se trouve dans la ou au moins l'une des zone(s) Z1 critique(s),
- ou le résultat de détection critique négatif si aucun point de mesure ne se trouve dans la ou aucune zone Z1 critique, le cas échéant, à pouvoir comparer en outre la position du nuage de points de mesure avec la zone Z2 non critique pour en déduire le résultat de détection non critique positif si au moins un point de mesure ou groupe de points de mesure se trouve dans la zone Z2 non critique ou le résultat de détection non critique négatif si aucun point ne se trouve dans la zone Z2 non critique.

Le capteur 1a de type LiDAR est particulièrement adapté, que ce soit dans une technologie 2D ou 3D, pour déterminer, lors de la télédétection, un tel nuage de points de mesure retournés par la ou les cible(s) C. Une caméra formant un tel capteur 1a peut aussi être adaptée.

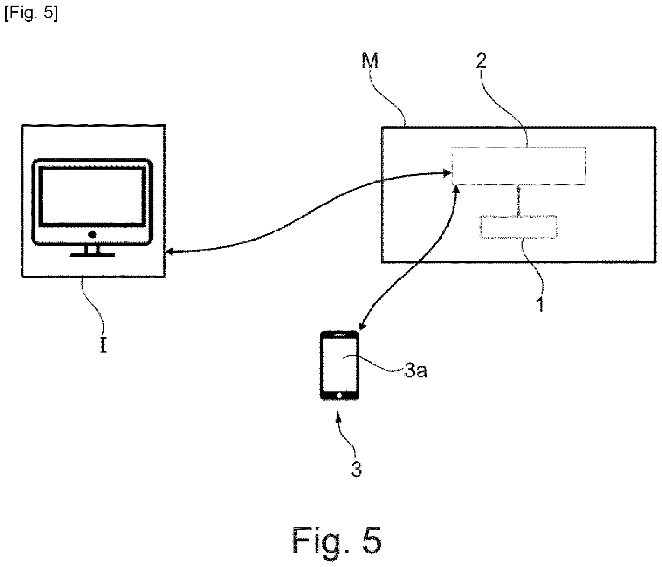

On peut voir sur la figure 5 que le système de contrôle peut comprendre une interface I reliée aux moyens de traitement 2 permettant à l'utilisateur d'effectuer les réglages nécessaires tels que le réglage des paramètres relatifs à la ou aux zone(s) de référence (nombre ; une ou deux zone(s) de référence, étendue et localisation de la ou chaque zone de référence par rapport à la machine agricole autonome M).

Les moyens de traitement 2 peuvent consister en un calculateur, une carte ou un circuit électronique intégrant un microprocesseur et des mémoires. La ou au moins l'une des mémoires contenant le programme de traitement des données du système.

La présente invention a également pour objet un procédé de contrôle de l'environnement d'une machine agricole M autonome d'alimentation animale, la machine agricole M étant apte et destinée, de manière autonome, lors d'un passage de prélèvement, à venir se positionner devant le front de prélèvement P1 d'un tas P de produit d'alimentation animale dans une position de prélèvement N et à réaliser une opération de prélèvement sur ce dernier, plusieurs passages de prélèvement formant respectivement une succession de positions de prélèvement N les unes à côtés des autres le long du front de prélèvement P1.

Un tel procédé consiste, à chaque passage de prélèvement, à réaliser, à l'aide d'un système de contrôle de l'environnement, les étapes suivantes :
- dans une étape d'observation : depuis la machine agricole M dans une position devant le front de prélèvement P1, de préférence dans l'une des positions de prélèvement N, observer l'environnement E de la machine agricole M devant le ou au niveau du front de prélèvement P1, puis,
- dans une étape de traitement : traiter les données de l'observation de sorte à détecter la présence ou l'absence de cible(s) C et à en déduire :
   . un résultat de détection critique positif indiquant la présence d'au moins une cible, dite cible C critique, susceptible de générer un incident, par exemple un arrêt de la machine agricole autonome M, au niveau et/ou devant le front de prélèvement P1 lors d'un prochain passage de prélèvement ou un résultat de détection critique négatif indiquant l'absence de cible(s) C critique(s),
   . éventuellement, un résultat de détection non critique positif indiquant la présence d'au moins une cible C non critique ou un résultat de détection non critique négatif indiquant l'absence de cible(s) C non critique(s),
- dans une étape d'information : mettre à disposition de l'utilisateur à distance de la machine agricole autonome M au moins une information sur les résultats, c'est-à-dire le ou les résultats dudit traitement.

Le système de contrôle de l'environnement peut être un système de contrôle de l'environnement selon la présente invention permettant la ou convenant à la mise en œuvre du procédé.

De préférence, dans l'étape d'information, dans le cas du résultat de détection critique positif, l'information peut consister en une information d'alerte se présentant sous la forme d'un message textuel et/ou visuel, de préférence du type SMS, apte à être envoyée depuis la machine agricole autonome M à au moins un appareil fixe ou portable, tel que par exemple un smartphone, une tablette ou un ordinateur personnel.

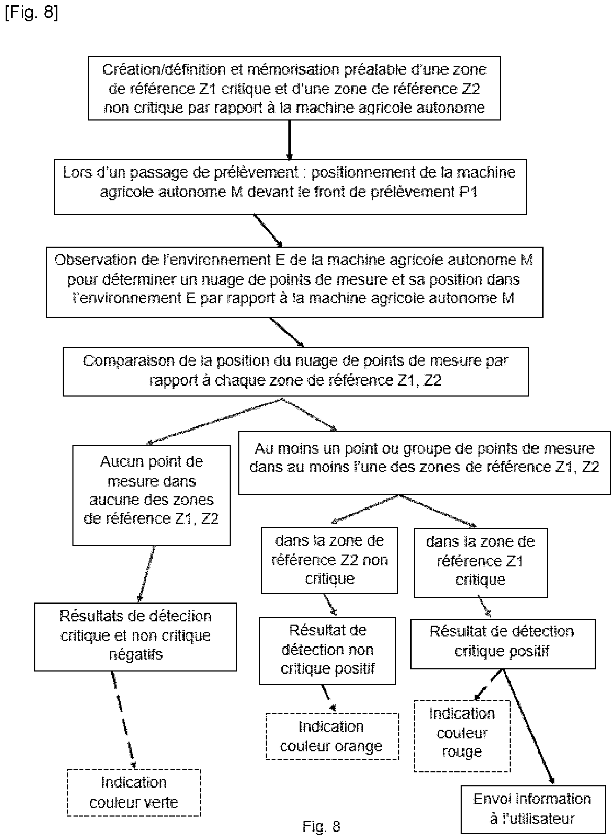

Dans un mode de réalisation préférentiel, le procédé peut consister :
- dans une étape préalable à l'étape de traitement : à définir et mémoriser au moins une zone de référence Z1 critique par rapport à la machine agricole M (figures 2, 3, 4, 7) et, éventuellement, au moins une zone de référence Z2 non critique par rapport à la machine agricole M (figures 3, 4, 8),
- dans l'étape de traitement : à traiter les données de l'observation de sorte à déterminer, par rapport à la machine agricole M, la position de la ou chaque cible C dans l'environnement E observé et à comparer la position avec la ou chaque zone de référence Z1, Z2 pour en déduire :
   . le résultat de détection critique positif si la ou moins l'une des cible(s) C se trouve dans la ou au moins l'une des zone(s) de référence Z1 critique(s) ou le résultat de détection critique négatif si aucune cible C ne se trouve dans la ou aucune zone de référence Z1 critique,
   . le cas échéant, le résultat de détection non critique positif si la ou moins l'une des cible(s) C se trouve dans la ou au moins l'une des zone(s) de référence Z2 non critique(s) ou le résultat de détection non critique négatif si aucune cible C ne se trouve dans la ou aucune zone de référence Z2 non critique.

De préférence, comme on peut le voir sur les figures 3 et 4, la zone de référence Z2 non critique est définie de sorte à être située entre le front de prélèvement P1 et la zone de référence Z1 critique lors de la réalisation de l'observation.

La définition et la mémorisation (ou le réglage) de la ou chaque zone de référence Z1, Z2, préalablement à l'étape de traitement, est effectuée par le constructeur, préférentiellement en usine. On comprend alors que cette étape préalable de définition et de mémorisation est réalisée, à la base ou par défaut, avant l'utilisation de la machine agricole autonome M et donc avant les passages de prélèvement et l'étape de traitement. Les réglages de base ou par défaut ainsi réalisés par le constructeur peuvent être modifiés par la suite par l'utilisateur, par exemple entre deux passages de prélèvement ou avant le premier passage de prélèvement, pour s'adapter aux exigences de l'utilisateur, par exemple pour s'adapter à la hauteur du front de prélèvement P1 et au du type de produit. Les différentes zones de référence Z1, Z2 sont ainsi définies par exemple en fonction du type de produit contenu dans le silo S, en fonction de la hauteur du tas de produit P ou selon les exigences de l'utilisateur. La définition de ces zones de référence Z1, Z2 a un impact direct sur le nombre de messages d'information envoyés à l'utilisateur par le système de contrôle de l'environnement de la machine agricole autonome M. En définissant ou créant une zone de référence Z2 non critique au niveau du front de prélèvement, l'utilisateur va autoriser la présence de produit P au pied du front de prélèvement P1, il s'agira par exemple de produit qui n'est plus compacté à la suite d'un éboulement. Dans le cas d'une zone de référence Z1 critique et absence de zone de référence Z2 non critique, le pied du front de prélèvement pourra être maintenu plus propre, c'est-à-dire sans produit décompacté au sol, puisque le système de contrôle de l'environnement E va détecter un éboulement et avertira l'utilisateur à la suite du résultat de détection critique positif.

De préférence, le procédé consiste, dans l'étape d'observation, à observer l'environnement E par télédétection en émettant des ondes radio ou acoustiques ou de la lumière émis(es) depuis la machine agricole M et/ou en réceptionnant les ondes ou la lumière réfléchie(s) ou diffusée(s) par la ou les cible(s) C et portant les données de l'observation. Dans le cas de la lumière émise, celle-ci peut être émise, de préférence, au moyen d'un Laser, de préférence selon la technologie LiDAR décrite plus haut.

Dans un mode de réalisation préférentiel du procédé, celui-ci peut consister
- dans l'étape d'observation, à déterminer, lors de la télédétection, un nuage de points de mesure retournés par la ou les cible(s) C,
- dans l'étape de traitement, à traiter les données de l'observation relative au nuage de points de mesure de sorte à déterminer, par rapport à la machine agricole autonome M, sa position dans l'environnement E observé et à comparer la position avec la ou chaque zone de référence Z1 critique pour en déduire le résultat de détection critique positif si au moins un point de mesure ou groupe de points de mesure se trouve dans la ou au moins l'une des zone(s) Z1 critique(s) ou le résultat de détection critique négatif si aucun point de mesure ne se trouve dans la ou aucune zone Z1 critique,
- le cas échéant, à comparer en outre la position du nuage de points de mesure avec la zone Z2 non critique pour en déduire le résultat de détection non critique positif si au moins un point de mesure ou groupe de points de mesure se trouve dans la zone Z2 non critique ou le résultat de détection non critique négatif si aucun point de mesure ne se trouve dans la zone Z2 non critique.

Le procédé consiste en outre dans l'étape de traitement, dans le cas du résultat de détection critique ou non critique positif, à identifier en outre la forme de la ou des cible(s) C critique(s) ou non critique(s).

La présente invention permet ainsi à l'utilisateur de pouvoir anticiper au moins une partie des signaux d'arrêt éventuellement générés par le dispositif de sécurité. Une telle anticipation lui permet alors d'intervenir sur le site, notamment en dehors de ses interventions de nettoyage habituelles, pour enlever le produit susceptible d'entraîner un arrêt d'urgence lors d'un prochain passage de prélèvement de la machine agricole autonome.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini par les revendications annexées.

## Revendications

1. Procédé de contrôle de l'environnement d'une machine agricole autonome (M) d'alimentation animale, la machine agricole autonome (M) étant apte et destinée, de manière autonome, lors d'un passage de prélèvement, à venir se positionner devant le front de prélèvement (P1) d'un tas de produit (P) d'alimentation animale dans une position de prélèvement (N) et à réaliser une opération de prélèvement sur le front de prélèvement (P1), plusieurs passages de prélèvement formant respectivement une succession de positions de prélèvement (N) les unes à côtés des autres le long du front de prélèvement (P1), le procédé consiste, à chaque passage de prélèvement, à réaliser, à l'aide d'un système de contrôle de l'environnement, les étapes suivantes :
- dans une étape d'observation : depuis la machine agricole autonome (M) dans une position devant le front de prélèvement (P1), de préférence dans l'une des positions de prélèvement (N), observer l'environnement (E) de la machine agricole autonome (M) devant le ou au niveau du front de prélèvement (P1), puis
- dans une étape de traitement : traiter les données de l'observation de sorte à détecter la présence ou l'absence de cible(s) (C) et à en déduire :
. un résultat de détection critique positif indiquant la présence d'au moins une cible, dite cible (C) critique, susceptible de générer un incident au niveau et/ou devant le front de prélèvement (P1) lors d'un prochain passage de prélèvement ou un résultat de détection critique négatif indiquant l'absence de cible(s) (C) critique(s),
. éventuellement, un résultat de détection non critique positif indiquant la présence d'au moins une cible (C) non critique ou un résultat de détection non critique négatif indiquant l'absence de cible(s) (C) non critique(s),
- dans une étape d'information : mettre à disposition de l'utilisateur à distance de la machine agricole autonome (M) au moins une information sur les résultats.

2. Procédé de contrôle, selon la revendication 1, **caractérisé en ce que**, dans l'étape d'information, dans le cas du résultat de détection critique positif, l'information consiste en une information d'alerte se présentant sous la forme d'un message textuel et/ou visuel, de préférence du type SMS, apte à être envoyée depuis la machine agricole autonome (M) à au moins un appareil fixe ou portable, tel que par exemple un smartphone, une tablette ou un ordinateur personnel.

3. Procédé de contrôle, selon l'une quelconque des revendications 1 à 2, **caractérisé en ce qu'**il consiste :
- dans une étape préalable à l'étape de traitement : à définir et mémoriser au moins une zone de référence (Z1) critique par rapport à la machine agricole autonome (M) et, éventuellement, au moins une zone de référence (Z2) non critique par rapport à la machine agricole autonome (M),
- dans l'étape de traitement : à traiter les données de l'observation de sorte à déterminer, par rapport à la machine agricole autonome (M), la position de la ou chaque cible dans l'environnement (E) observé et à comparer la position avec la ou chaque zone de référence (Z1, Z2) pour en déduire :
. le résultat de détection critique positif si la ou moins l'un des cible(s) (C) se trouve dans la ou au moins l'une des zone(s) de référence (Z1) critique(s) ou le résultat de détection critique négatif si aucune cible (C) ne se trouve dans la ou aucune zone de référence (Z1) critique,
. le cas échéant, le résultat de détection non critique positif si la ou moins l'une des cible(s) (C) se trouve dans la ou au moins l'une des zone(s) de référence (Z2) non critique(s) ou le résultat de détection non critique négatif si aucune cible (C) ne se trouve dans la ou aucune zone de référence (Z2) non critique.

4. Procédé de contrôle, selon la revendication 3, **caractérisé en ce que** la zone de référence (Z2) non critique est définie de sorte à être située entre le front de prélèvement (P1) et la zone de référence (Z1) critique lors de la réalisation de l'observation.

5. Procédé de contrôle, selon l'une quelconque des revendications 1 à 4, **caractérisé en ce qu'**il consiste, dans l'étape d'observation, à observer l'environnement (E) par télédétection en émettant des d'ondes radio ou acoustiques ou de la lumière, de préférence au moyen d'un Laser, émis(es) depuis la machine agricole autonome (M) et/ou en réceptionnant les ondes ou la lumière réfléchie(s) ou diffusée(s) par la ou les cible(s) (C) et portant les données de l'observation.

6. Procédé de contrôle, selon la revendication 5 prise en combinaison avec la revendication 3 ou 4, **caractérisé en ce qu'**il consiste, dans l'étape d'observation, à déterminer, lors de la télédétection, un nuage de points de mesure retournés par la ou les cible(s) (C), dans l'étape de traitement, à traiter les données de l'observation relative au nuage de points de mesure de sorte à déterminer, par rapport à la machine agricole autonome (M), sa position dans l'environnement (E) observé et à comparer la position avec la ou chaque zone de référence (Z1) critique pour en déduire le résultat de détection critique positif si au moins un point de mesure ou groupe de points de mesure se trouve dans la ou au moins l'une des zone(s) (Z1) critique(s) ou le résultat de détection critique négatif si aucun point de mesure ne se trouve dans la ou aucune zone (Z1) critique, le cas échéant, à comparer en outre la position du nuage de points de mesure avec la zone (Z2) non critique pour en déduire le résultat de détection non critique positif si au moins un point de mesure ou groupe de points de mesure se trouve dans la zone (Z2) non critique ou le résultat de détection non critique négatif si aucun point de mesure ne se trouve dans la zone (Z2) non critique.

7. Procédé de contrôle, selon l'une quelconque des revendications 1 à 6, **caractérisé en ce qu'**il consiste en outre dans l'étape de traitement, dans le cas du résultat de détection critique ou non critique positif à identifier en outre la forme de la ou des cible(s) (C) critique(s) ou non critique(s).

8. Système de contrôle de l'environnement d'une machine agricole autonome (M) d'alimentation animale, la machine agricole autonome (M) étant apte et destinée, de manière autonome, lors d'un passage de prélèvement, à venir se positionner devant le front de prélèvement (P1) d'un tas de produit (P) d'alimentation animale dans une position de prélèvement (N) et à réaliser une opération de prélèvement sur le front de prélèvement (P1), plusieurs passages de prélèvement formant respectivement une succession de positions de prélèvement (N) les unes à côtés des autres le long du front de prélèvement (P1), le système de contrôle comprend :
- des moyens d'observation (1) embarqués sur la machine agricole autonome (M) et configurés de sorte à pouvoir, dans une position de la machine agricole autonome (M) devant le front de prélèvement (P1), de préférence dans l'une des positions de prélèvement (N), observer l'environnement (E) de la machine agricole autonome (M) devant ou au niveau du front de prélèvement (P1),
- des moyens de traitement (2) embarqués sur la machine agricole autonome (M) et étant reliés aux moyens d'observation (1) et configurés pour traiter les données de l'observation obtenues par les moyens d'observation (1) de sorte à pouvoir détecter la présence ou l'absence de cible(s) (C) et à en déduire :
. un résultat de détection critique positif indiquant la présence d'au moins une cible, dite cible (C) critique, susceptible de générer un incident au niveau et/ou devant le front de prélèvement (P1) lors d'un prochain passage de prélèvement ou un résultat de détection critique négatif indiquant l'absence de cible(s) (C) critique(s),
. éventuellement, un résultat de détection non critique positif indiquant la présence d'au moins une cible (C) non critique ou un résultat de détection non critique négatif indiquant l'absence de cible(s) (C) non critique(s),
- des moyens d'information (3) reliés aux moyens de traitement (2) et configurés pour mettre à disposition de l'utilisateur au moins une information sur les résultats.

9. Système de contrôle, selon la revendication 8, **caractérisé en ce que** les moyens d'information (3) consistent en un appareil fixe ou portable muni de moyens de restitution (3a) visuelle et/ou sonore configurés pour pouvoir restituer l'information sous une forme visuelle et/ou sonore et **en ce que** l'information consiste en une information d'alerte se présentant sous la forme d'un message textuel et/ou visuel, de préférence du type SMS, les moyens de traitement (2) étant configurés pour pouvoir transmettre l'information aux moyens d'information (3).

10. Système de contrôle, selon la revendication 8 ou 9, **caractérisé en ce que** les moyens de traitement (2) sont aptes à définir et mémoriser au moins une zone de référence (Z1) critique par rapport à la machine agricole autonome (M) et, éventuellement, au moins une zone de référence (Z2) non critique par rapport à la machine agricole autonome (M) et à traiter les données de l'observation de sorte à pouvoir déterminer, par rapport à la machine agricole autonome (M), la position de la ou chaque cible (C) dans l'environnement (E) observé et à pouvoir comparer la position avec la ou chaque zone de référence (Z1, Z2) pour en déduire :
. le résultat de détection critique positif si la ou moins l'une des cible(s) (C) se trouve dans la ou au moins l'une des zone(s) de référence (Z1) critique(s) ou le résultat de détection critique négatif si aucune cible (C) ne se trouve dans la ou aucune zone de référence (Z1) critique,
. le cas échéant, le résultat de détection non critique positif si la au moins l'une des cible(s) (C) se trouve dans la ou au moins l'une des zone(s) de référence (Z2) non critique(s) ou le résultat de détection non critique négatif si aucune cible (C) ne se trouve dans la ou aucune zone de référence (Z2) non critique.

11. Système de contrôle, selon l'une quelconque des revendications 8 à 10, **caractérisé en ce que** les moyens d'observation (1) sont configurés pour pouvoir observer l'environnement (E) par télédétection et **en ce qu'**ils comprennent au moins un capteur (1a) apte à émettre dans l'environnement (E) des ondes radio ou acoustiques ou de lumière, de préférence de la lumière Laser, et/ou à réceptionner les ondes ou la lumière réfléchie(s) ou diffusée(s) par la ou les cible(s) (C) et portant les données de l'observation.

12. Système de contrôle, selon les revendications 10 et 11, **caractérisé en ce que** les moyens d'observation (1) sont configurés pour déterminer, lors de la télédétection, un nuage de points de mesure retournés par la ou les cible(s) (C) et **en ce que** les moyens de traitement (2) sont configurés pour pouvoir traiter les données de l'observation relative au nuage de points de mesure de sorte à pouvoir déterminer, par rapport à la machine agricole autonome (M), la position du nuage de points de mesure dans l'environnement (E) observé et à pouvoir comparer la position avec la ou chaque zone de référence (Z1) critique pour en déduire le résultat de détection critique positif si au moins un point de mesure ou groupe de points de mesure se trouve dans la ou au moins l'une des zone(s) (Z1) critique(s) ou le résultat de détection critique négatif si aucun point de mesure ne se trouve dans la ou aucune zone (Z1) critique, le cas échéant, à pouvoir comparer en outre la position du nuage de points de mesure avec la zone (Z2) non critique pour en déduire le résultat de détection non critique positif si au moins un point de mesure ou groupe de points de mesure se trouve dans la zone (Z2) non critique ou le résultat de détection non critique négatif si aucun point ne se trouve dans la zone (Z2) non critique.

13. Système de contrôle, selon l'une quelconque des revendications 8 à 12, **caractérisé en ce que** les moyens d'observation (1) et les moyens de traitement (2) sont configurés pour pouvoir identifier en outre la forme de la cible (C) critique ou non critique.

## Patentansprüche

1. Verfahren zur Kontrolle der Umgebung einer autonomen landwirtschaftlichen Tierfütterungsmaschine (M), wobei die autonome landwirtschaftliche Maschine (M) dazu geeignet und bestimmt ist, auf autonome Weise, während einem Entnahmedurchgang, sich vor der Entnahmeseite (P1) einer Stapel von Tierfütterungsprodukten (P) in einer Entnahmeposition (N) zu positionieren und einen Entnahmevorgang an der Entnahmeseite (P1) vorzunehmen, wobei mehrere Entnahmedurchgänge jeweils eine Abfolge von entlang der Entnahmeseite (P1) nebeneinanderliegenden Entnahmepositionen (N) bilden, das Verfahren besteht darin, bei jedem Entnahmedurchgang, mittels eines Systems zur Kontrolle der Umgebung, folgende Phasen durchzuführen:
- in einer Beobachtungsphase: von der autonomen landwirtschaftlichen Maschine (M) aus in einer Position vor der Entnahmeseite (P1), vorzugsweise in einer der Entnahmepositionen (N), die Umgebung (E) der autonomen landwirtschaftlichen Maschine (M) vor oder an der Entnahmeseite (P1) zu beobachten, dann
- in einer Verarbeitungsphase: die Beobachtungsdaten verarbeiten, um die Anwesenheit ober Abwesenheit eines Zieles (von Ziele) (C) zu erkennen und davon:
. ein positives kritisches Erkennungsergebnis, das die Anwesenheit mindestens eines Zieles, kritisches Ziel (C) genannt, welches ein Zwischenfall an und/oder vor der Entnahmeseite (P1) bei dem nächsten Entnahmedurchgang verursachen könnte, oder ein negatives kritisches Erkennungsergebnis, das die Abwesenheit eines kritischen Zieles (von kritischen Ziele) (C) anzeigt,
. möglicherweise, ein positives unkritisches Erkennungsergebnis, das die Anwesenheit mindestens eines unkritischen Zieles (C) oder ein negatives unkritisches Erkennungsergebnis, das die Abwesenheit eines unkritischen Zieles (von unkritischen Ziele) (C) anzeigt, abzuleiten,
- in einer Informationsphase: dem Fernbenutzer der autonomen landwirtschaftlichen Maschine (M) mindestens eine Information über die Ergebnisse zur Verfügung zu stellen.

2. Verfahren zur Kontrolle nach Anspruch 1, **dadurch gekennzeichnet, dass** in der Informationsphase, im Falle eines positiven kritischen Erkennungsergebnisses, die Information aus einem Warnsignal besteht, in Form einer schriftlichen und/oder visuellen Nachricht, vorteilhafterweise in Form einer SMS, die zum Versand von der autonomen landwirtschaftlichen Maschine (M) aus zu mindestens einem festen oder mobilen Gerät, wie z.B. ein Smartphone, ein iPad oder ein Computer, geeignet ist.

3. Verfahren zur Kontrolle nach irgendeinem der Ansprüche 1 bis 2, **dadurch gekennzeichnet, dass** es darin besteht:
- in einer Phase vor der Verarbeitungsphase: mindestens ein bezüglich zur autonomen landwirtschaftlichen Maschine (M) kritisches Referenzgebiet (Z1), und möglicherweise mindestens ein bezüglich zur autonomen landwirtschaftlichen Maschine (M) unkritisches Referenzgebiet (Z2) zu definieren und zu speichern,
- in der Verarbeitungsphase: die Beobachtungsdaten zu verarbeiten, um bezüglich der autonomen landwirtschaftlichen Maschine (M), die Position des oder jedes Ziels in der beobachteten Umgebung (E) zu bestimmen, und die Position mit dem oder jedem Referenzgebiet (Z1, Z2) zu vergleichen, um davon:
. das positive kritische Erkennungsergebnis, wenn sich das oder mindestens eines der Ziel(e) (C) in dem oder mindestens einem der kritischen Referenzgebiet(e) (Z1) oder das negative kritische Erkennungsergebnis, wenn sich kein Ziel (C) in dem oder in keinem kritischen Referenzgebiet (1) befindet,
. gegebenenfalls, das positive unkritische Erkennungsergebnis, wenn sich das oder mindestens eines der Ziel(e) (C) in dem oder mindestens einem der unkritischen Referenzgebiet(e) (Z2) befindet oder das negative unkritische Erkennungsergebnis, wenn sich kein Ziel (C) in dem oder keinem unkritischen Referenzgebiet (Z2) befindet, abzuleiten.

4. Verfahren zur Kontrolle nach Anspruch 3, **dadurch gekennzeichnet, dass** das unkritische Referenzgebiet (Z2) derart definiert ist, dass es sich während der Beobachtung zwischen der Entnahmeseite (P1) und dem kritischen Referenzgebiet (Z1) erstreckt.

5. Verfahren zur Kontrolle nach irgendeinem der Ansprüche 1 bis 4, **dadurch gekennzeichnet, dass** es darin besteht, in der Beobachtungsphase, die Umgebung (E) mittels Fernerkennung zu beobachten, durch Aussenden von der autonomen landwirtschaftlichen Maschine (M) aus von Radio- oder akustischen Wellen oder von Licht, vorzugsweise mittels eines Lasers, und/oder durch den Empfang der Wellen oder dem Licht, die von dem Ziel oder von den Ziele (C) reflektiert oder verbreitet werden und die Beobachtungsdaten tragen.

6. Verfahren zur Kontrolle nach Anspruch 5 in Zusammenhang mit dem Anspruch 3 oder 4, **dadurch gekennzeichnet, dass** es darin besteht, in der Beobachtungsphase, während der Fernerkennung, eine durch das Ziel oder die Ziele (C) zurückgegebene Messungspunktwolke zu bestimmen, in der Verarbeitungsphase, die Daten der relativen Beobachtung der Messungspunktwolke zu verarbeiten, um bezüglich der autonomen landwirtschaftlichen Maschine (M), ihre Position in der beobachteten Umgebung (E) zu bestimmen und die Position mit dem oder jedem kritischen Referenzgebiet (Z1) zu vergleichen, um davon das positive kritische Erkennungsergebnis abzuleiten, wenn sich mindestens ein Messungspunkt oder eine Gruppe von Messungspunkte in dem oder in mindestens einem der kritischen Gebiet(e) (Z1) befindet, oder das negative kritische Erkennungsergebnis, wenn sich kein Messungspunkt in dem oder keinem kritischen Gebiet (Z1) befindet, gegebenenfalls ausserdem die Position der Messungspunktwolke mit dem unkritischen Gebiet (Z2) zu vergleichen, um davon das positive unkritische Erkennungsergebnis abzuleiten, wenn sich mindestens ein Messungspunkt oder eine Gruppe von Messungspunkte in dem unkritischen Gebiet (Z2) befindet oder das negative unkritische Erkennungsergebnis, wenn sich kein Messungspunkt in dem unkritischen Gebiet (Z2) befindet.

7. Verfahren zur Kontrolle nach irgendeinem der Ansprüche 1 bis 6, **dadurch gekennzeichnet, dass** es weiterhin in der Verarbeitungsphase darin besteht, im Falle des positiven kritischen oder unkritischen Erkennungsergebnisses, weiterhin die Form des kritischen oder unkritischen Zieles oder der kritischen oder unkritischen Ziele (C) zu identifizieren.

8. System zur Kontrolle der Umgebung einer autonomen landwirtschaftlichen Tierfütterungsmaschine (M), wobei die autonome landwirtschaftliche Maschine (M) dazu geeignet und bestimmt ist, auf autonome Weise, während einem Entnahmedurchgang, sich vor der Entnahmeseite (P1) einer Stapel von Tierfütterungsprodukten (P) in einer Entnahmeposition (N) zu positionieren und einen Entnahmevorgang an der Entnahmeseite (P1) vorzunehmen, wobei mehrere Entnahmedurchgänge jeweils eine Abfolge von entlang der Entnahmeseite (P1) nebeneinanderliegenden Entnahmepositionen (N) bilden, das System zur Kontrolle umfasst:
- Beobachtungsmittel (1) onboard der autonomen landwirtschaftlichen Maschine (M), die derart ausgestaltet sind, um in einer Position der autonomen landwirtschaftlichen Maschine (M) vor der Entnahmeseite (P1), und vorzugsweise in einer der Entnahmepositionen (N), die Umgebung der autonomen landwirtschaftlichen Maschine (M) vor oder an der Entnahmeseite (P1) zu beobachten,
- Verarbeitungsmittel (2) onboard der autonomen landwirtschaftlichen Maschine (M), die mit den Beobachtungsmittel (1) verbunden und derart ausgestaltet sind, um die von den Beobachtungsmittel (1) erhaltenen Beobachtungsdaten zu verarbeiten, um die Anwesenheit ober Abwesenheit eines Zieles (von Ziele) (C) zu erkennen und davon:
. ein positives kritisches Erkennungsergebnis, das die Anwesenheit mindestens eines Zieles, kritisches Ziel (C) genannt, welches ein Zwischenfall an und/oder vor der Entnahmeseite (P1) bei einem nächsten Entnahmedurchgang verursachen könnte, oder ein negatives kritisches Erkennungsergebnis, das die Abwesenheit eines kritischen Zieles (von kritischen Ziele) (C), anzeigt,
. möglicherweise, ein positives unkritisches Erkennungsergebnis, das die Anwesenheit mindestens eines unkritischen Ziels (C) oder ein negatives unkritisches Erkennungsergebnis, das die Abwesenheit eines unkritischen Zieles (von unkritischen Ziele) (C) anzeigt, abzuleiten,
- Informationsmittel (3), die mit den Verarbeitungsmittel (2) verbunden und derart ausgestaltet sind, um dem Benutzer mindestens eine Information über die Ergebnisse zur Verfügung zu stellen.

9. System zur Kontrolle nach Anspruch 8, **dadurch gekennzeichnet, dass** die Informationsmittel (3) aus einem festen oder mobilen Gerät bestehen, das mit Mittel (3a) zur visuellen und/oder akustischen Rückerstattung der Information in visueller und/oder akustischer Form ausgestaltet sind und, dass die Information aus einem Warnsignal besteht, in Form einer schriftlichen und/oder visuellen Nachricht, vorteilhafterweise in Form einer SMS, wobei die Verarbeitungsmittel (3) ausgestaltet sind, um die Information auf die Informationsmittel (3) weiterzuleiten.

10. System zur Kontrolle nach Anspruch 8 oder 9, **dadurch gekennzeichnet, dass** die Verarbeitungsmittel (2) geeignet sind mindestens ein bezüglich zur autonomen landwirtschaftlichen Maschine (M) kritisches Referenzgebiet (Z1), und möglicherweise mindestens ein bezüglich zur autonomen landwirtschaftlichen Maschine (M) unkritisches Referenzgebiet (Z2) zu definieren und zu speichern, die Beobachtungsdaten zu verarbeiten, um bezüglich der autonomen landwirtschaftlichen Maschine (M), die Position des oder jedes Ziels in der beobachteten Umgebung (E) zu bestimmen, und die Position mit dem oder jedem Referenzgebiet (Z1, Z2) vergleichen zu können, um davon:
. das positive kritische Erkennungsergebnis, wenn sich das oder mindestens eines der Ziel(e) (C) in dem oder mindestens einem der kritischen Referenzgebiet(e) (Z1) oder das negative kritische Erkennungsergebnis, wenn sich kein Ziel (C) in dem oder in keinem kritischen Referenzgebiet (1) befindet,
. gegebenenfalls das positive unkritische Erkennungsergebnis, wenn sich das oder mindestens eines der Ziel(e) (C) in dem oder mindestens einem der unkritischen Referenzgebiet(e) (Z2) befindet oder das negative unkritische Erkennungsergebnis, wenn sich kein Ziel (C) in dem oder keinem der unkritischen Referenzgebiet(e) (Z2) befindet, abzuleiten.

11. System zur Kontrolle nach irgendeinem der Ansprüche 8 bis 10, **dadurch gekennzeichnet, dass** die Beobachtungsmittel (1) ausgestaltet sind, um die Umgebung (E) mittels Fernerkennung zu beobachten, und dass sie mindestens ein Sensor (1a) umfassen, der dazu geeignet ist in der Umgebung (E) Radio- oder akustische Wellen oder Licht, vorzugsweise Laserstrahlen auszusenden und/oder die Wellen oder das Licht, die von dem Ziel oder von den Ziele (C) reflektiert oder verbreitet werden und die Beobachtungsdaten tragen, zu empfangen.

12. System zur Kontrolle nach den Ansprüchen 10 und 11, **dadurch gekennzeichnet, dass** die Beobachtungsmittel (1) ausgestaltet sind, um während der Fernerkennung, eine durch das oder die Ziel(e) (C) zurückgegebene Messungspunktwolke zu bestimmen und, dass die Verarbeitungsmittel (2) ausgestaltet sind, um die Daten der relativen Beobachtung der Messungspunktwolke zu verarbeiten, um bezüglich der autonomen landwirtschaftlichen Maschine (M), ihre Position in der beobachteten Umgebung (E) zu bestimmen und die Position mit dem oder jedem kritischen Referenzgebiet (1) vergleichen zu können, um davon das positive kritische Erkennungsergebnis abzuleiten, wenn sich mindestens ein Messungspunkt oder eine Gruppe von Messungspunkte in dem oder mindestens einem der kritischen Gebiet(e) (Z1) befindet, oder das negative kritische Erkennungsergebnis, wenn sich kein Messungspunkt in dem oder keinem kritischen Gebiet (Z1) befindet, gegebenenfalls weiterhin die Position der Messungspunktwolke mit dem unkritischen Gebiet (Z2) zu vergleichen, um davon das positive unkritische Erkennungsergebnis abzuleiten, wenn sich mindestens ein Messungspunkt oder eine Gruppe von Messungspunkte in dem unkritischen Gebiet (Z2) befindet oder das negative unkritische Erkennungsergebnis, wenn sich kein Messungspunkt in dem unkritischen Gebiet (Z2) befindet.

13. System zur Kontrolle nach irgendeinem der Ansprüche 1 bis 12, **dadurch gekennzeichnet, dass** die Beobachtungsmittel (1) und die Verarbeitungsmittel (2) ausgestaltet sind um weiterhin die Form des kritischen oder unkritischen Ziels (C) zu identifizieren.

## Claims

1. Method for controlling the environment of an autonomous agricultural animal feeding machine (M), the autonomous agricultural machine (M) being able and intended to, in an autonomous manner, during an extraction run, position itself in front of the pick-up face (P1) of a pile of animal feeding product (P) in an extraction position (N) and to carry out an extraction operation on the pick-up face (P1), several extraction runs respectively forming a succession of extraction positions (N) side by side along the pick-up face (P1), the method consists, on each extraction run, in carrying out the following steps, using an environmental control system:
- in an observation step: from the autonomous agricultural machine (M) in a position in front of the pick-up face (P1), preferably in one of the extraction positions (N), in observing the environment (E) of the autonomous agricultural machine (M) in front of or at the pick-up face (P1), then
- in a processing step: in processing the observation data so as to detect the presence or absence of target(s) (C) and to deduce therefrom:
. a positive critical detection result indicating the presence of at least one target, called a critical target (C), likely to generate an incident at and/or in front of the pick-up face (P1) during a subsequent extraction run, or a negative critical detection result indicating the absence of any critical target(s) (C),
. if applicable, a positive non-critical detection result indicating the presence of at least one non-critical target (C) or a negative non-critical detection result indicating the absence of any non-critical target(s) (C),
- in an information step: in making available to the remote user of the autonomous agricultural machine (M) at least one item of information on the results.

2. Control method, according to claim 1, **characterized in that**, in the information step, in the case of the positive critical detection result, the information consists of warning information in the form of a written and/or visual message, preferably of the SMS type, able to be sent from the autonomous agricultural machine (M) to at least one fixed or portable device, such as for example a smartphone, an iPad or a personal computer.

3. Control method, according to any one of claims 1 to 2, **characterized in that** it consists:
- in a step prior to the processing step: in defining and storing at least one reference zone (Z1) which is critical with regard to the autonomous agricultural machine (M) and, if applicable, at least one reference zone (Z2) which is non-critical with regard to the autonomous agricultural machine (M),
- in the processing step: in processing the observation data so as to determine, with regard to the autonomous agricultural machine (M), the position of the or each target in the observed environment (E) and in comparing the position with the or each reference zone (Z1, Z2) in order to deduce therefrom:
. the positive critical detection result if the or at least one of the target(s) (C) is located in the or at least one of the critical reference zone(s) (Z1), or the negative critical detection result if no target (C) is located in the or any critical reference zone (Z1),
. where applicable, the positive non-critical detection result if the or at least one of the target(s) (C) is located in the or at least one of the non-critical reference zone(s) (Z2), or the negative non-critical detection result if no target (C) is located in the or any non-critical reference zone (Z2).

4. Control method according to claim 3, **characterized in that** the non-critical reference zone (Z2) is defined so as to be located between the pick-up face (P1) and the critical reference zone (Z1) when performing the observation.

5. Control method according to any one of claims 1 to 4, **characterized in that** it consists, in the observation step, in observing the environment (E) by remote sensing by emitting radio or acoustic waves or light, preferably by means of a laser, emitted from the autonomous agricultural machine (M) and/or by receiving the waves or light reflected or emitted by the target(s) (C) and carrying the observation data.

6. Control method according to claim 5, taken in combination with claim 3 or 4, **characterized in that** it consists, in the observation step, in determining, during remote sensing, a measurement scatter plot returned by the target(s) (C), in the processing step, in processing the observation data relating to the measurement scatter plot so as to determine, with regard to the autonomous agricultural machine (M), its position in the observed environment (E) and in comparing the position with the or each critical reference zone (Z1) to deduce therefrom the positive critical detection result if at least one measurement point or group of measurement points is located in the or at least one of the critical zone(s) (Z1), or the negative critical detection result if no measurement point is located in the or any critical zone (Z1), if applicable, in also comparing the position of the measurement scatter plot with the non-critical zone (Z2) to deduce therefrom the positive non-critical detection result if at least one measurement point or group of measurement points is located in the non-critical zone (Z2), or the negative non-critical detection result if no measurement point is located in the non-critical zone (Z2).

7. Control method according to any one of claims 1 to 6, **characterized in that** it also consists, in the processing step, in the case of the positive critical or non-critical detection result, in also identifying the shape of the critical or non-critical target(s) (C).

8. System for controlling the environment of an autonomous agricultural animal feeding machine (M), the autonomous agricultural machine (M) being able and intended to, in an autonomous manner, during an extraction run, position itself in front of the pick-up face (P1) of a pile of animal feeding product (P) in an extraction position (N) and to carry out an extraction operation on the pick-up face (P1), several extraction runs respectively forming a succession of extraction positions (N) side by side along the pick-up face (P1), the control system comprises:
- observing means (1) onboard of the autonomous agricultural machine (M) and configured so as to be able, in a position of the autonomous agricultural machine (M) in front of the pick-up face (P1), preferably in one of the extraction positions (N), to observe the environment (E) of the autonomous agricultural machine (M) in front of or at the pick-up face (P1),
- processing means (2) onboard of the autonomous agricultural machine (M), being connected to the observing means (1) and configured to process the observation data obtained by the observing means (1) so as to be able to detect the presence or absence of target(s) (C) and to deduce therefrom:
. a positive critical detection result indicating the presence of at least one target, called a critical target (C), likely to generate an incident at and/or in front of the pick-up face (P1) during a subsequent extraction run, or a negative critical detection result indicating the absence of any critical target(s) (C),
. if applicable, a positive non-critical detection result indicating the presence of at least one non-critical target (C) or a negative non-critical detection result indicating the absence of any non-critical target(s) (C),
- information means (3) connected to the processing means (2) and configured to make available to the user at least one item of information on the results.

9. Control system according to claim 8, **characterized in that** the information means (3) consist of a fixed or portable device equipped with visual and/or audible reproduction devices (3a) configured to be able to reproduce the information in a visual and/or audible form, and **in that** the information consists of warning information in the form of a written and/or visual message, preferably of the SMS type, the processing means (2) being configured to be able to send the information to the information means (3).

10. Control system according to claim 8 or 9, **characterized in that** the processing means (2) are able to define and store at least one reference zone (Z1) which is critical with regard to the autonomous agricultural machine (M) and, if applicable, at least one reference zone (Z2) which is non-critical with regard to the autonomous agricultural machine (M), and to process the observation data so as to be able to determine, with regard to the autonomous agricultural machine (M), the position of the or each target (C) in the observed environment (E), and to be able to compare the position with the or each reference zone (Z1, Z2) in order to deduce therefrom:
. the positive critical detection result if the or at least one of the target(s) (C) is located in the or at least one of the critical reference zone(s) (Z1), or the negative critical detection result if no target (C) is located in the or any critical reference zone (Z1),
. where applicable, the positive non-critical detection result if the or at least one of the target(s) (C) is located in the or at least one of the non-critical reference zone(s) (Z2), or the negative non-critical detection result if no target (C) is located in the or any non-critical reference zone (Z2).

11. Control system according to any one of claims 8 to 10, **characterized in that** the observing means (1) are configured to be able to observe the environment (E) by remote sensing, and **in that** they comprise at least one sensor (1a) capable of emitting radio or acoustic or light waves in the environment (E), preferably laser light, and/or of receiving the waves or light reflected or emitted by the target(s) (C) and carrying the observation data.

12. Control system according to claim 10 and 11, **characterized in that** the observing means (1) are configured to determine, during remote sensing, a measurement scatter plot returned by the target(s) (C), and **in that** the processing means (2) are configured to be able to process the observation data relating to the measurement scatter plot so as to be able to determine, with regard to the autonomous agricultural machine (M), the position of the measurement scatter plot in the observed environment (E) and to be able to compare the position with the or each critical reference zone (Z1) to deduce therefrom the positive critical detection result if at least one measurement point or group of measurement points is located in the or at least one of the critical zone(s) (Z1), or the negative critical detection result if no measurement point is located in the or any critical zone (Z1), if applicable, also to be able to compare the position of the measurement scatter plot with the non-critical zone (Z2) to deduce therefrom the positive non-critical detection result if at least one measurement point or group of measurement points is located in the non-critical zone (Z2), or the negative non-critical detection result if no point is located in the non-critical zone (Z2).

13. Control system according to any one of claims 8 to 12, **characterized in that** the observing means (1) and the processing means (2) are configured to also be able to identify the shape of the critical or non-critical target (C).
